# EUROPÄISCHE PATENTANMELDUNG

(11) **EP 2 500 163 A1**
(43) Veröffentlichungstag der Anmeldung: **19.09.2012**
(21) Anmeldenummer: 11158864.6
(22) Anmeldetag: 18.03.2011
(51) Int. Cl.: B29C 70/08, B29C 70/34, B29C 70/46, B29C 70/50, B32B 5/06, B32B 5/26, D04H 13/00, B32B 37/04, B60R 13/08, G10K 11/162

(54) **Thermoplastisch verformbarer Verbundwerkstoff**

(71) Anmelder: Quadrant Plastic Composites AG, 5600 Lenzburg (CH)
(72) Erfinder: Die Erfindernennung liegt noch nicht vor
(74) Vertreter: Schmauder & Partner AG Patent- & Markenanwälte VSP

(57) **Zusammenfassung**

Die Erfindung betrifft einen thermoplastisch verformbaren Verbundwerkstoff aus einer Kernschicht mit einer Glasfasergewebe-Lage, die beidseitig mit einer Faservlies-Lage verbunden ist, welche Polypropylenfasern und Glasfasern enthält. Die Kernschicht ist mit mindestens einer Deckschicht verbunden, die Polypropylenfasern und Polyethylenterephthalatfasern enthält. Die Erfindung betrifft ferner ein Verfahren zur Herstellung des Werkstoffs durch Vernadeln der einzelnen Schichten und Erwärmen zum Aufschmelzen der Polypropylenfasern, sowie die Verwendung des Werkstoffs für Automobilteile.

## Beschreibung

### Technisches Gebiet

Die Erfindung betrifft einen thermoplastisch verformbaren Verbundwerkstoff aus einer Kernschicht mit einer Glasfasergewebe-Lage, die beidseitig mit einer Faservlies-Lage vernadelt ist, und mindestens einer Deckschicht, ferner ein Verfahren zur Herstellung dieses Verbundwerkstoffs sowie seine Verwendung.

In der WO 2006/111037 ist ein Verbundwerkstoff beschrieben, der vorzugsweise aus einer Glasfasergewebe-Lage B, die beidseitig mit einer Faservlies-Lage A vernadelt ist, besteht. Dieser Verbundwerkstoff kann beispielsweise im Kraftfahrzeugbereich eingesetzt werden.

Die WO 2006/048304 beschreibt ein Verkleidungsteil für Kraftfahrzeuge, umfassend eine poröse Kernschicht und Deckschichten. Die Kernschicht besteht entweder aus einem porösen Faservlies aus Glasfasern und Polypropylenfasern oder aus einem Kunststoffschaum, die Deckschichten bestehen entweder aus einem mit Glasfasern verstärkten Polypropylen-Faservlies oder aus einer Folie aus Aluminium oder einem hochschmelzenden Kunststoff. Das Verkleidungsteil kann zusätzlich noch eine dünne Abdeckung aus einem Polyethylenterephthalat-Vlies enthalten.

Der Erfindung lag nun die Aufgabe zugrunde, einen verbesserten Verbundwerkstoff bereitzustellen, der insbesondere für Motorkapseln geeignet ist und eine hohe Schallabsorption, einen ausreichenden Steinschlagschutz, eine hohe Weiterreissfestigkeit, eine gute Wasser- und Ölbeständigkeit aufweist und mit Flammschutz ausrüstbar ist.

Diese Aufgabe wird durch den erfindungsgemässen Verbundwerkstoff gelöst. Gegenstand der Erfindung ist demzufolge ein thermoplastisch verformbarer Verbundwerkstoff, umfassend eine Kernschicht mit einer Glasfasergewebe-Lage B, die beidseitig mit einer Faservlieslage A verbunden ist, welche Polypropylenfasern (PPF) und Glasfasern (GF) enthält.

Der Verbundwerkstoff ist dadurch gekennzeichnet, dass die Kernschicht mit mindestens einer Deckschicht D in Form eines Vlieses verbunden ist, welches Polyethylenterephthalat-Fasern (PETF) und PPF enthält.

In einer speziellen Ausführungsform ist zwischen der Kernschicht und der Deckschicht eine Zwischenschicht C in Form eines Vlieses eingelagert, welches GF und PPF enthält.

Die Glasfasergewebe-Lage B hat vorzugsweise ein Flächengewicht von 200 bis 1000 g/m², insbesondere von 400 bis 800 g/m². Die Fasern liegen vorzugsweise als Faserbündel mit einem Titer von 30 bis 3000 tex vor. Das Gewebe kann 4/1 längs/quer balanciert sein, mit Leinwandbindung. Auch 1/1-Balancierung ist möglich. Das Glasfasergewebe verleiht dem Verbundwerkstoff eine hohe Schlag- und Weiterreissfestigkeit.

Die Faservlies-Lagen A bestehen vorzugsweise aus 30 bis 60 Gew.-% GF und 70 bis 40 Gew.-% PPF, insbesondere von 40 bis 55 Gew.-% GF und 60 bis 45 Gew.-% PPF. Ihr Flächengewicht beträgt vorzugsweise 200 bis 2000 g/m², insbesondere 500 bis 1000 g/m². Die Faservlies-Lagen A werden nach dem Krempel- oder Airlay-Verfahren hergestellt, wobei ein endloses Band mit einem Luftporengehalt von vorzugsweise 40 bis 80 Vol.-%, insbesondere von 50 bis 70 Vol.-% erhalten wird.

Die Deckschicht D besteht vorzugsweise aus 20 bis 60 Gew.-% PETF und 80 bis 40 Gew.-% PPF, insbesondere aus 30 bis 50 Gew.-% PETF und 70 bis 50 Gew.-% PPF. Ihr Flächengewicht beträgt vorzugsweise 20 bis 500 g/m², insbesondere 30 bis 300 g/m². Bevorzugt enthält der Verbundwerkstoff beidseitig Deckschichten D, es ist aber auch möglich, nur eine Deckschicht D vorzusehen und auf der anderen Seite eine Polypropylenfolie anzuordnen. Diese Folie ist an die Kernschicht angeschmolzen derart, dass sie gut haftet und gleichzeitig als geschlossene Versiegelungssschicht wirkt.

Die Deckschicht D weist vorzugsweise einen Luftporengehalt von 0 bis 20 Vol.-%, insbesondere von 1 bis 15 Vol.-% auf. Sie verleiht dem Verbundwerkstoff eine hohe Schallabsorption, einen guten Steinschlagschutz und eine ausreichende Wasser- und Ölbeständigkeit.

Die Zwischenschicht C, die bei der alternativen Ausführungsform zwischen der Kernschicht und den Deckschichten eingelagert ist, enthält vorzugsweise 5 bis 40 Gew.-% GF und 95 bis 60 Gew.-% PPF, insbesondere 10 bis 30 Gew.-% GF und 90 bis 70 Gew.-% PPF. Der Luftporengehalt beträgt vorzugsweise 5 bis 50 Vol.-%, insbesondere 10 bis 30 Vol.-%. Die fakultative Zwischenschicht C verleiht dem Verbundwerkstoff eine gute Steifigkeit und verbesserte Schallabsorption.

Die einzelnen Lagen bzw. Schichten werden thermisch miteinander verbunden, vorzugsweise zusätzlich noch durch Vernadeln. Die Nadelung bewirkt eine teilweise Orientierung der Glasfasern in z-Richtung, wodurch bei der späteren Verarbeitung des Verbundwerkstoffs die Rückstellkräfte der Fasern nach der Pressverformung beim Wiedererhitzen zum Fertigteil wirksam werden können. Bei dieser bevorzugten Ausführungsform werden zunächst Vliese D und A und das Gewebe B, und ebenso Vliese D und A zusammengefügt, anschliessend werden die beiden so erhaltenen Gefüge miteinander vernadelt. Das vernadelte Gebilde wird dann, z.B. in einem Durchluftofen oder durch IR-Bestrahlung, kurzzeitig, z.B. 30 bis 360 sec lang auf Temperaturen zwischen 180 und 210°C erwärmt, so dass das Polypropylen aufschmilzt. Die Schmelze durchtränkt dabei die Glasfasern und verbindet sie miteinander. Bei der alternativen Ausführungsform werden zunächst Vliese D, C und A, und ebenso Vliese D und C sowie Vliese A und das Gewebe B zusammengefügt, anschliessend werden die drei so erhaltenen Gefüge miteinander vernadelt. Das vernadelte Gebilde wird dann wie oben beschrieben zum Schmelzen des Polypropylens erwärmt.

Der poröse Verbundwerkstoff wird dann in einem Laminator bei niedrigem Druck verpresst, vorzugsweise 5 bis 60 sec lang bei 0.05 bis 1 bar, beispielsweise in einer Doppelbandpresse oder in einer Kaschiereinrichtung. Infolge der Rückstellkräfte der z-orientierten Glasfasern bleiben die Luftporen weitgehend erhalten. Die einzelnen Massnahmen und Vorgänge beim Erwärmen und Verpressen sind ausführlich in der EP-B 1 868 796 beschrieben. Bei dieser Behandlung im Laminator erhält die geschmolzene Polypropylenmatrix genügend Zeit, sich gut mit den Verstärkungsfasern und den Decklagen zu verbinden, wobei sich die Luftporen und Fasern im Verbundwerkstoff gleichmässig verteilen.

Falls als Alternative zu der einen Deckschicht D eine Polypropylenfolie angebracht werden soll, wird diese nach der Ofenbehandlung beispielsweise in die Doppelbandpresse eingeführt und auf den noch heissen Vlies-Kern bei ca. 180°C, d.h. über dem Schmelzpunkt, oder auf der Aussenseite mittels temperierter Doppelbandpresse bei ca. 150°C, d.h. unter dem Schmelzpunkt, angeschmolzen.

Die erfindungsgemässen, bahnförmigen Verbundwerkstoffe können als Zuschnitt gelagert werden. Sie sind insbesondere zur Herstellung von Automobilaussenteilen geeignet, vor allem für Motorkapseln und als Unterbodenschutz. Dazu werden die Werkstoffe thermoplastisch zu Fertigteilen umgeformt, beispielsweise in zweiteiligen Formen oder durch Tiefziehen. Nach dem Verpressen unter Druck expandiert das Formteil bei den angewandten hohen Temperaturen infolge der Rückstellkräfte der Faserverstärkung wieder, so dass die darin enthaltenen Luftporen auch im Fertigteil ihre akustische Wirksamkeit entfalten können.

In der nachfolgenden Tabelle sind die einzelnen Schichten mit ihrem Aufbau, der Zusammensetzung der Vliese, ihrem Flächengewicht und dem Luftporengehalt aufgeführt. Zum besseren Verständnis sind diejenigen Schichten, die beidseitig angeordnet sein können, durchnummeriert, wobei beispielsweise der Index 1 für oberhalb und der Index 2 für unterhalb der Kernschicht B verstanden werden kann. Die Schichten sind miteinander vernadelt.

**Tabelle: Schichtenaufbau**

| Schicht | Schichtaufbau | Gew.-% GF bzw. PETF | Flächengewicht | Luftporenge-halt |
|---|---|---|---|---|
| D1 | PP/PET- Vlies | 30 - 50% PET | 30 - 300 g/m² | 0-20% |
| C1* | PP/GF - Vlies | 10-30%GF | 200 - 400 g/m² | 10-30% |
| A1 | PP/GF - Vlies | 40 - 55% GF | 500 - 1000 g/m² | 50 - 70% |
| B | GF- Gewebe | 100% GF | 400 - 800 g/m² | 0 |
| A2 | PP/GF-Vlies | 40 - 55% GF | 500 - 1000 g/m² | 50 - 70% |
| C2* | PP/GF- Vlies | 10-30%GF | 200 - 400 g/m² | 10-30% |
| D2* | PP/PET- Vlies | 30 - 50% PET | 30 - 300 g/m² | 0-20% |

| | | | | |
|---|---|---|---|---|
| * Die Schichten C1, C2 und D2 sind optional | | | | |

## Patentansprüche

1. Thermoplastisch verformbarer Verbundwerkstoff, umfassend eine Kernschicht mit einer Glasfasergewebe-Lage B, die beidseitig mit einer Faservlies-Lage A verbunden ist, welche Polypropylenfasern (PPF) und Glasfasern (GF) enthält, **dadurch gekennzeichnet, dass** die Kernschicht mit mindestens einer Deckschicht D in Form eines Vlieses verbunden ist, welches Polyethylenterephthalat-Fasern (PETF) und PPF enthält.

2. Verbundwerkstoff nach Anspruch 1, **dadurch gekennzeichnet, dass** zwischen der Kernschicht und der Deckschicht eine Zwischenschicht C eingelagert ist, welche GF und PPF enthält.

3. Verbundwerkstoff nach Anspruch 1 oder 2, **dadurch gekennzeichnet, dass** die einzelnen Lagen bzw. Schichten folgende Zusammensetzung haben:
A: 30 bis 60 Gew.-% GF und 70 bis 40 Gew.-% PPF,
B: 100 Gew.-% Glasfasergewebe,
gegebenenfalls C: 5 bis 40 Gew.-% GF und 95 bis 60 Gew.-% PPF,
D: 20 bis 60 Gew.-% PETF und 80 bis 40 Gew.-% PPF.

4. Verbundwerkstoff nach einem der Ansprüche 1 bis 3, **dadurch gekennzeichnet, dass** die einzelnen Lagen bzw. Schichten folgende Flächengewichte haben:
A: 200 bis 2000 g/m²,
B: 200 bis 1000 g/m²,
gegebenenfalls C: 100 bis 500 g/m²,
D : 20 bis 500 g/m².

5. Verbundwerkstoff nach einem der Ansprüche 1 bis 4, **dadurch gekennzeichnet, dass** die einzelnen Lagen bzw. Schichten folgenden Porengehalt aufweisen:
A: 40 bis 80 Vol.-%,
gegebenenfalls C: 5 bis 50 Vol.-%,
D: 0 bis 20 Vol.-%.

6. Verbundwerkstoff nach einem der Ansprüche 1 bis 5, **dadurch gekennzeichnet, dass** die Schichten miteinander thermisch verbunden sind.

7. Verbundwerkstoff nach Anspruch 6, **dadurch gekennzeichnet, dass** die Schichten zusätzlich miteinander vernadelt sind.

8. Verbundwerkstoff nach einem der Ansprüche 1 bis 7, **dadurch gekennzeichnet, dass** er nur auf der einen Seite eine Deckschicht D aufweist und auf der anderen Seite eine Polypropylenfolie angeordnet ist.

9. Verfahren zur Herstellung des Verbundwerkstoffs nach Anspruch 1, **dadurch gekennzeichnet, dass** zunächst Vliese D und A und das Gewebe B, ebenso Vliese D und A zusammengefügt werden, dass anschliessend die beiden so erhaltenen Gefüge miteinander vernadelt werden, und dass schliesslich das vernadelte Gebilde auf Temperaturen zwischen 180 und 210°C erwärmt wird, so dass das Polypropylen aufschmilzt und die Fasern miteinander verbindet.

10. Verfahren zur Herstellung des Verbundwerkstoffs nach Anspruch 2, **dadurch gekennzeichnet, dass** zunächst Vliese D, C und A, ebenso Vliese D und C, sowie Vlies A und das Gewebe B zusammengefügt werden, dass anschliessend die drei so erhaltenen Gefüge miteinander vernadelt werden, und dass schliesslich das vernadelte Gebilde auf Temperaturen zwischen 180 und 210°C erwärmt wird, so dass das Polypropylen aufschmilzt und die Fasern miteinander verbindet.

11. Verwendung des Verbundwerkstoffs nach den Ansprüchen 1 bis 8 zur Herstellung von Automobilteilen, insbesondere für Motorkapseln und als Unterbodenschutz.
